# FASCICULE DE BREVET EUROPEEN

(11) **EP 1 138 033 B1**
(45) Date de publication et mention de la délivrance du brevet: **05.03.2003**
(21) Numéro de dépôt: 99958260.4
(22) Date de dépôt: 07.12.1999
(51) Int. Cl.: G09B 9/12, G09B 9/02, A63G 31/16

(54) **DISPOSITIF DE MISE EN MOUVEMENT A DEBATTEMENT LIMITE DE CHARGE SELON UN A SIX DEGRES DE LIBERTE**
VORRICHTUNG ZUR BEWEGUNG EINER LAST MIT BEGRENZTEM AUSSCHLAG IN EINEM BIS SECHS FREIHEITSGRADEN
MOVEMENT ACTUATING DEVICE WITH LIMITED LOAD DISPLACEMENT ALONG ONE TO SIX DEGREES OF FREEDOM

(30) Priorité: 08.12.1998 FR 9815481
(43) Date de publication de la demande: 04.10.2001
(73) Titulaire: Thales, 75008 Paris (FR)
(72) Inventeur: COUVET, Serge Thomson-CSF Prop. Int. Dép. Brevets, 94117 Arcueil Cedex (FR); ALET, Robert Thomson-CSF Prop. Int. Dép. Brevets, 94117 Arcueil Cedex (FR)
(74) Mandataire: Chaverneff, Vladimir
(86) Numéro de dépôt international: FR9903038
(87) Numéro de publication internationale: WO00034934

(56) Documents cités:
- FR-A- 2 739 475
- US-A- 2 695 783
- US-A- 3 952 979
- US-A- 5 277 584
- US-A- 5 605 462

## Description

La présente invention se rapporte à un dispositif de mise en mouvement à débattement limité de charge selon un à six degrés de liberté conformément au préambule de la revendication 1 (voir FR-A-2 739 475).

Les simulateurs de conduite de véhicule terrestre, aérien ou maritime comportent une maquette de poste de pilotage de ce véhicule. Pour obtenir une simulation réaliste, on met en mouvement cette maquette. Les dispositifs de mise en mouvement de maquette actuels sont en général du type à plate-forme supportée par un ensemble de six vérins hydrauliques, ce qui permet d'animer la maquette supportée par cette plate-forme selon six degrés de liberté. Une telle solution est satisfaisante du point de vue du réalisme des mouvements communiqués à la maquette, mais est très onéreuse car les vérins, déjà onéreux en eux-mêmes, nécessitent une centrale hydraulique et un système de commande également onéreux.

On connaît d'après le brevet français 2 757 925 un dispositif de mise en mouvement de charge à trois moteurs électriques à trois degrés de liberté dans sa version de base, ce qui suffit pour certaines applications, mais si l'on veut ajouter d'autres degrés de liberté il faut prévoir des plates-formes et des moteurs supplémentaires, ce qui en augmente le prix de revient.

On connaît d'après le brevet français 2 739 475 un dispositif de positionnement dans l'espace d'une plate-forme. Le poids de cette plate-forme est équilibré par au moins un ressort ou vérin. Pour pouvoir déplacer la plate-forme selon trois axes (en vertical, tangage et roulis), on la monte sur trois systèmes à ressorts en forme de pyramide (comprenant quatre ressorts et un câble de traction). Pour pouvoir déplacer la plate-forme selon six axes, on utilise une tout autre configuration à six ensembles (ressort + câble de traction) fixés deux à deux en triangle, selon une disposition bien connue utilisée dans les mouvements classiques à six vérins.

Cependant, le dispositif décrit dans ce document français pour un mouvement selon trois axes ne peut pas être modifié facilement pour obtenir d'autres combinaisons de mouvements selon trois axes, et le dispositif à six ensembles, bien que pouvant être adapté à différentes combinaisons de mouvements selon trois axes, serait beaucoup trop onéreux pour des applications simples ne nécessitant que des mouvements selon trois axes.

La présente invention a pour objet un dispositif de mise en mouvement de charge selon un à six degrés de liberté, qui soit simple à réaliser et de faible prix de revient, le choix des degrés de liberté, en nombre compris dans l'intervalle précité, pouvant être facilement modifiable.

Le dispositif de mise en mouvement à débattement limité de charge selon un à six degrés de liberté, conforme à l'invention, est définit dans les revendications 1 et 8.

La présente invention sera mieux comprise à la lecture de la description détaillée de plusieurs modes de réalisation, pris à titre d'exemples non limitatifs et illustrés par le dessin annexé, sur lequel :
- la figure 1, est une vue schématisée en perspective d'un dispositif conforme à l'invention ;
- la figure 2, est une vue schématique en coupe d'un mode de réalisation d'un actionneur du dispositif de la figure 1, à coupleurs électromagnétiques ;
- la figure 3, est une représentation schématique simplifiée de variantes du dispositif de la figure 1, et
- la figure 4, est un bloc-diagramme fonctionnel de la partie de commande du dispositif de la figure 1.

L'invention est décrite ci-dessous en référence à un simulateur de conduite de véhicule ou d'aéronef, par exemple un avion, mais il est bien entendu qu'elle n'est pas limitée à cette seule application, et qu'elle peut être mise en oeuvre dans d'autres domaines où l'on a à déplacer selon un à six degrés de liberté, avec un débattement limité, une charge quelconque, que cette charge soit légère (par exemple des instruments de chirurgie pour un télémanipulateur) ou plus lourde (par exemple une plate-forme de positionnement).

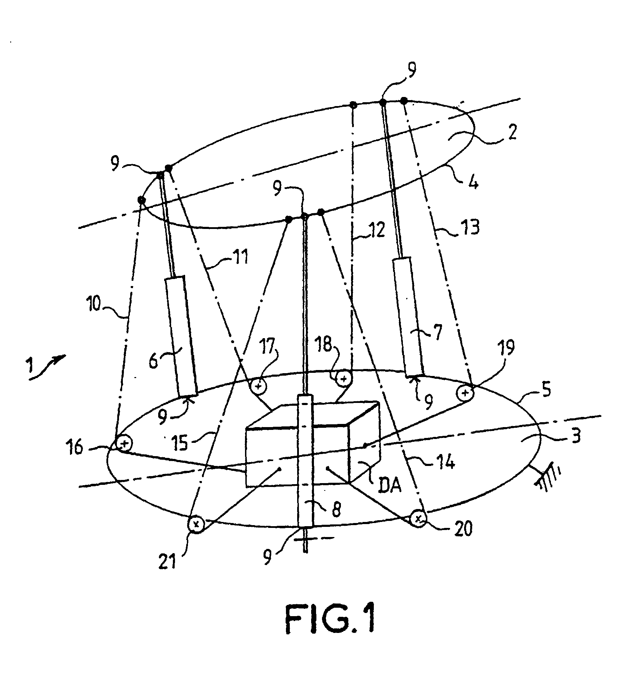

Le dispositif 1 représenté en figure 1 comporte une plate-forme 2 mobile par rapport à une embase de référence 3. Cette embase 3 peut être fixe, par exemple une plaque de béton fixée au sol ou en l'air, à des poutres, ou bien déplaçable (par exemple le « bras » ou « l'épaule » d'un télémanipulateur), et elle n'est pas nécessairement horizontale. La plate-forme 2 supporte une maquette de cabine de pilotage (non représentée).

On trace sur les faces en vis-à-vis de la plate-forme 2 et de l'embase 3 des cercles 4 et 5 de rayons non nécessairement identiques. Le centre du cercle 4 coïncide sensiblement avec le centre de gravité de la plate-forme, et celui du cercle 5 est à peu près au centre de la surface utile de l'embase. Les cercles servent à déterminer les emplacements des fixations des dispositifs élastiques de poussée reliant la plate-forme à l'embase. Ces dispositifs de poussée, référencés 6 à 8 respectivement, servent à fournir les efforts d'accélération de l'ensemble (plate-forme + maquette) en statique et en dynamique. Les dispositifs 6 à 8 sont fixés à la plate-forme et à l'embase par des dispositifs articulés tels que des rotules 9 (ou des dispositifs équivalents).

Les dispositifs 6 à 8 sont, par exemple, des ressorts ou des vérins à gaz non freinés ou tout dispositif élastique équivalent, de préférence un dispositif dont la force est la plus indépendante possible de son élongation

Selon une variante, non représentée, la plate-forme 2 peut être suspendue à un support se trouvant au-dessus d'elle. Dans ce cas, les points d'attache des dispositifs 6 à 8 sont disposés sur ce support de la même façon qu'ils le sont sur le cercle 5.

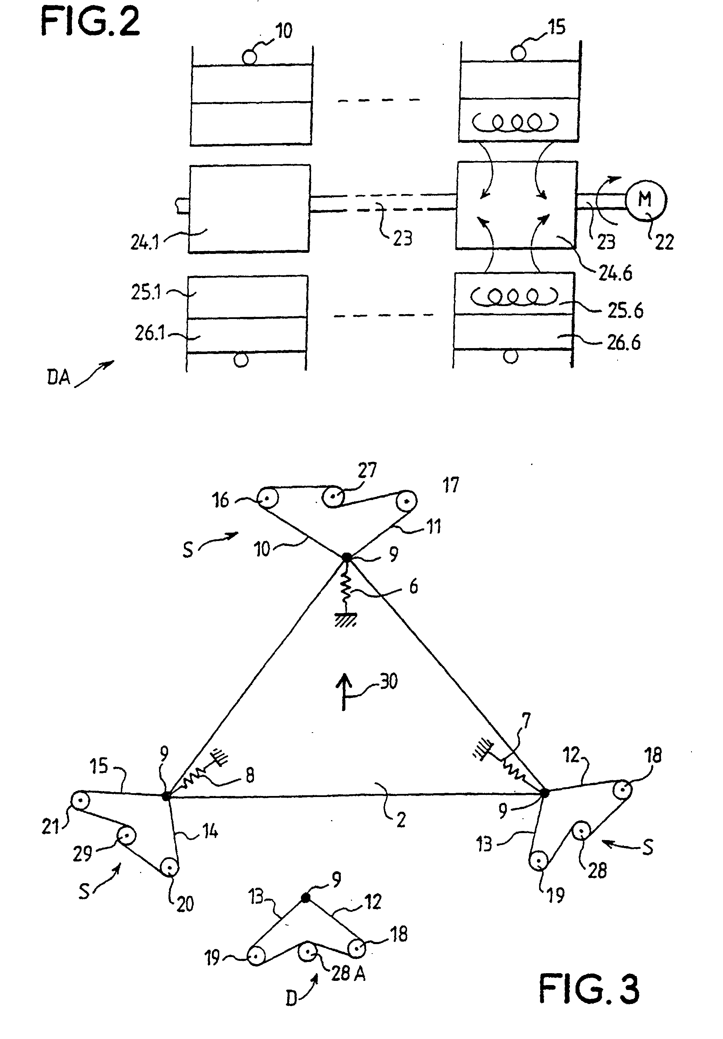

Les mouvements désirés sont appliqués à la plate-forme 2 à l'aide de six câbles (ou dispositifs similaires déformables tels que des chaînes, des bielles,..) groupés par deux, chaque paire aboutissant respectivement près d'une rotule 9 de la plate-forme 2, ces câbles étant respectivement référencés 10 à 15 pour les rotules des dispositifs 6 à 8. Les câbles de chacune des paires doivent concourir en un point, réel ou virtuel, qui est, de préférence proche de la rotule 9 correspondante de la plate-forme 2. Tous les dispositifs 10 à 15 doivent passer, au niveau de l'embase 3, par des points fixes, ou pratiquement fixes. Ces points sont soit des renvois d'angle (poulies de renvoi pour des câbles ou articulations pour des biellettes, par exemple) si les dispositifs 10 à 15 se prolongent au-delà des points fixes, de l'embase, soit des actionneurs (moteurs électriques munis de poulies d'enroulement dans le cas de câbles, par exemple) si les dispositifs 10 à 15 ne continuent pas au-delà des points fixes. Dans le cas représenté sur le dessin, pour lequel les dispositifs 10 à 15 sont des câbles qui se prolongent au-delà des points fixes, ces derniers sont des poulies de renvoi, respectivement référencées 16 à 21. Ces poulies sont fixées à l'embase 3, symétriquement par rapport à la rotule 9 (de l'embase 3) de la paire de câbles correspondante. La distance entre les poulies de l'embase 3 de chaque paire de câbles est telle que le triangle formé par la paire de câbles et la ligne joignant les deux poulies soit sensiblement équilatéral en position intermédiaire de la plate-forme 2 (plate-forme parallèle à l'embase, et câbles tendus pour contraindre les dispositifs 6 à 8). Au-delà des poulies 16 à 21, les câbles 10 à 15 aboutissent à un dispositif DA d'actionnement de ces câbles. Ce dispositif DA peut soit être un dispositif central, comme représenté plus en détail en figure 2, soit comporter des moteurs indépendants, comme représenté plus en détail en figure 3. Le fait de solliciter la plate-forme 2 dans un sens opposé à celui dans lequel tendent à la pousser les dispositifs 6 à 8 à l'aide des câbles 10 à 15 passant sur les poulies 16 à 21 et formant lesdits triangles, permet de « haubaner» ces dispositifs 6 à 8 en contrôlant les cinq degrés de liberté déterminant l'attitude de la plate-forme. Dans tous les cas, les câbles 10 à 15 doivent, bien entendu, être tendus.

Le mode de réalisation du dispositif DA représenté en figure 2 comporte un moteur unique 22 sur l'arbre 23 duquel sont disposés côte-à-côte six coupleurs, par exemple des noyaux magnétiques 24.1 à 24.6. Dans le cas de noyaux magnétiques chacun de ceux-ci coopère avec- un électroaimant annulaire concentrique, ces électroaimants étant référencés 25.1 à 25.6 respectivement. Chaque noyau comporte de la poudre ou des grains de matériau ferromagnétique et forme avec son électroaimant associé un coupleur électromagnétique classique à friction variable en fonction du courant alimentant l'électroaimant. Chaque électroaimant 25.1 à 25.6 porte une poulie concentrique, respectivement 26.1 à 26.6. Les extrémités des câbles 10 à 15 sont enroulées sur les poulies 26.1 à 26.6. En position statique du dispositif 1, le moteur 22 tourne, et les courants envoyés aux électroaimants 25.1 à 25.6 sont régulés pour tendre les câbles 10 à 15 et contraindre l'attitude de la plate-forme. Afin de minimiser les pertes d'énergie par frottement dans les coupleurs, le moteur est régulé en vitesse en fonction des paramètres du mouvement de la cabine. Bien entendu, lorsque le dispositif 1 n'est pas utilisé, pour éviter d'avoir à faire tourner le moteur 22 afin de tendre les câbles 10 à 15, tout en maintenant la plate-forme 2 en une position correspondant à sa position de maintenance ou de transport, on peut maintenir la plate-forme à l'aide de tout dispositif mécanique approprié (béquilles, câble de suspension accroché à une poutre,...).

On a représenté en figure 3 un autre mode de réalisation du dispositif d'actionnement de câbles DA. Ce dispositif comporte trois moteurs à poulie d'enroulement, respectivement 27 à 29, à raison d'un moteur par paire de câbles, respectivement les paires 10-11, 12-13 et 14-15.

Pour chaque paire de câbles, les extrémités de ceux-ci peuvent être enroulées sur les poulies 27 à 29 de deux façons différentes : soit dans le même sens, pour obtenir une configuration « symétrique » S telle que représentée sur la partie principale du dessin, soit en sens contraires, pour obtenir une configuration « dissymétrique» D, telle que représentée à part pour l'une des poulies (référencée 28A dans ce cas). La configuration S permet de tirer ou de relâcher simultanément les deux câbles de la paire en question, suivant le sens de rotation du moteur correspondant. La configuration D permet de tirer l'un des câbles de la paire, tandis que l'autre câble est relâché en même temps. Comme on le verra ci-dessous, selon les différentes combinaisons de configuration S et D, on peut obtenir différentes combinaisons de mouvements de la plate-forme 2.

Bien entendu, les poulies 27 à 29 peuvent être celles d'un dispositif de commande DA à trois coupleurs électromagnétique similaire à celui de la figure 3. Le dispositif de commande DA, comme d'ailleurs ses autres modes de réalisation, peut être éloigné de la plate-forme, des poulies de renvoi appropriées étant disposées à cet effet sur le trajet des câbles entre les poulies 16 à 21 et le dispositif DA utilisé.

Selon une autre possibilité, dite configuration indépendante I (non représentée), les câbles de l'un ou de deux des trois paires peuvent être actionnés chacun par son propre moteur à poulie d'enroulement.

Pour expliquer le fonctionnement des différentes combinaisons de configurations de poulies du mode de réalisation de la figure 3, on suppose que la maquette de cabine de pilotage est disposée sur la plate-forme 2 de façon que son avant soit dirigé vers le couple de câbles 10, 11 (flèche 30 représentant le sens de déplacement du véhicule ou de l'aéronef simulé).

Selon une première combinaison à trois configurations « S », d'abord on immobilise la poulie 27, les câbles 10 et 11 étant tendus de façon que le dispositif 6 soit, par exemple, à mi-course. Si l'on actionne les poulies 28 et 29 dans le même sens, on obtient un mouvement de tangage par rapport à l'articulation supérieure 9 du dispositif 6, et si ces poulies sont actionnées en sens contraires, on obtient un mouvement de roulis par rapport à cette même articulation 9. On obtient un mouvement vertical de la plate-forme 2 si les trois poulies 27 à 29 sont actionnées simultanément, à la même vitesse angulaire, dans le même sens.

Bien entendu, pour cette combinaison, comme pour les autres combinaisons à au moins deux degrés de liberté, on peut actionner la plate-forme selon deux où plusieurs degrés de liberté simultanément (par exemple, simultanément roulis et tangage ou bien roulis + tangage + mouvement vertical).

Selon une deuxième combinaison à trois configurations "D", on obtient les degrés de liberté suivants :
- en lacets si les trois poulies sont actionnées simultanément dans le même sens de rotation et de la même façon toutes les trois,
- en déplacement latéral si la poulie 27 est bloquée (câbles 10 et 11 tendus et de même longueur) et les poulies 28,29 actionnées dans le même sens de rotation
- en déplacement longitudinal si la poulie 27 est bloquée (les câbles 10 et 11 étant tendus et de même longueur), et les poulies 28,29 actionnées dans des sens de rotation différents.

Selon une troisième combinaison à deux configurations "S" (relatives aux poulies 28 et 29) et une configuration "D" (poulie 27), on obtient les trois degrés de liberté suivants :
- en roulis : poulie 27 bloquée et poulies 28,29 actionnées en sens contraires.
- en tangage : poulie 27 bloquée et poulies 28,29 actionnées dans le même sens
- en déplacement latéral : poulies 28,29 bloquées et poulie 27 actionnée dans un sens et dans l'autre.

Selon une quatrième combinaison à une configuration "S" (poulie 27) et à deux configurations "D" (poulies 28 et 29), on obtient les trois degrés de liberté suivants :
- en tangage : poulies 28,29 bloquées, et poulie 27 actionnée dans un sens et dans l'autre,
- en déplacement latéral : poulie 27 bloquée et poulies 28,29 actionnées dans le même sens,
- en déplacement longitudinal : poulie 27 bloquée et poulies 28,29 actionnées en sens contraires.

Ainsi, le dispositif de l'invention est très facilement personnalisable : il suffit de modifier le sens d'enroulement des câbles sur l'une ou plusieurs des poulies 27 à 29 (configuration S ou D) et de modifier en conséquence le logiciel de commande des moteurs agissant sur les câbles, tous les autres éléments restant les mêmes quelle que soit la configuration désirée à trois degrés de liberté, ce qui permet de réduire nettement le prix de revient du dispositif de mise en mouvement.

Si l'on désire obtenir quatre degrés de liberté, on ajoute un moteur, car les câbles 10 et 11 (correspondant à l'avant du dispositif de mise en mouvement) sont alors mus indépendamment, chacun par un moteur correspondant avec sa propre poulie d'entraînement de câble (la poulie unique 27 étant, bien entendu, supprimée).

Si les câbles enroulés sur les poulies 28 et 29 sont en configuration S, on obtient des mouvements en roulis, tangage, vertical et latéral.

Si ces câbles sont en configuration D, on obtient des mouvements en longitudinal, lacets, tangage et latéral.

Selon une septième combinaison, la poulie 27 est bloquée (ou bien, en variante, les câbles 10 et 11 sont remplacés par des bielles articulées à leurs extrémités), tandis que les câbles 12 à 15 sont actionnés indépendamment les uns des autres, chacun par son propre moteur (poulies 28 et 29 supprimées). On obtient alors les quatre degrés de liberté suivants :
- roulis : câbles 12,13 actionnées simultanément dans un sens (tirés ou relâchés, mais en étant toujours tendus) et câbles 14,15 actionnés simultanément dans l'autre sens,
- tangage : tous les câbles 12 à 15 sont actionnés simultanément dans un sens et dans l'autre sens, de la même valeur
- déplacement longitudinal : câbles 12 et 15 actionnés simultanément dans un sens, et câbles 13,14 actionnés simultanément dans l'autre sens,
- déplacement latéral : câbles 12,13 actionnés simultanément dans un sens, et câbles 14,15 actionnés simultanément dans l'autre sens;

Bien entendu, si l'on veut obtenir, pour une configuration unique, six degrés de liberté, il faut actionner séparément chacun des câbles 10 à 15, soit à l'aide d'un dispositif actionneur tel que celui de la figure 2, soit à l'aide de six moteurs indépendants. Il est également bien entendu que si l'on n'a besoin que de 1 ou 2 degrés de liberté, on remplace chacune des deux paires de câbles, par une bielle articulée à ses extrémités.

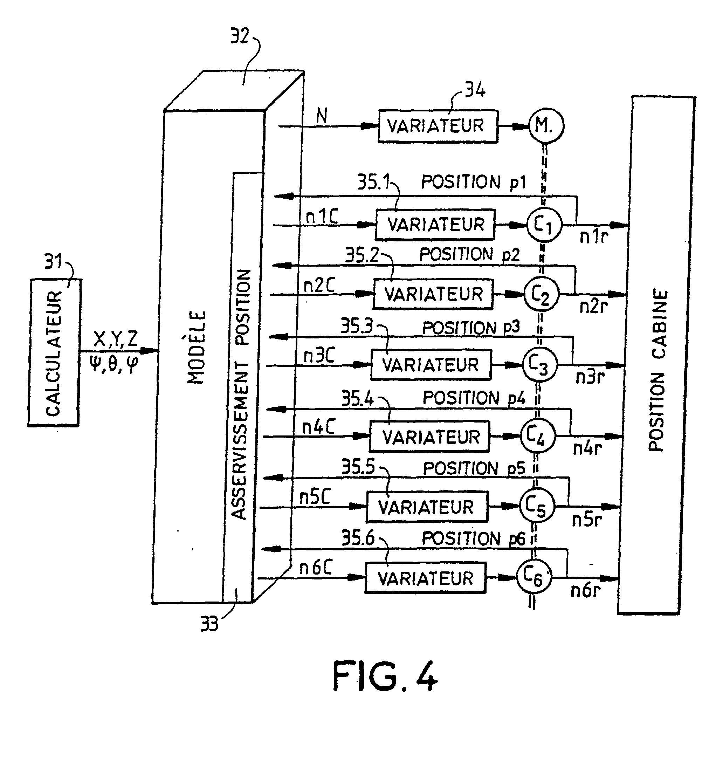

On a représenté en figure 4 le bloc-diagramme fonctionnel du dispositif de régulation de position de la plate-forme 2, cas où le dispositif DA comporte six coupleurs (figure 2). Le calculateur 31 du simulateur élabore sous la commande d'un programme et/ou sous la commande d'un instructeur les paramètres X,Y et Z de positions de la plate-forme et ses angles d'attitude Ψ, θ et ϕ dans un repère spatial cartésien O,X,Y,Z, dans lequel X,Y et Z sont les coordonnées du centre de gravité de la plate-forme par exemple, et Ψ, θ et ϕ les angles du vecteur 30, par exemple, (figure 3), par rapport aux trois axes OX,OY, et OZ. Ces six paramètres sont envoyés à un dispositif 32 transcodeur les transformant en signaux de commande pour les différents moteurs du dispositif DA. Ce dispositif 32 comporte un modèle du comportement du dispositif mécanique et électrique 1 en fonction des signaux de commande envoyés au dispositif DA. Le dispositif 32 commande via un variateur 34 la vitesse de rotation N du moteur 22 (voir figure 2). D'autre part, le dispositif 32 est associé à un circuit d'asservissement 33 fournissant les valeurs de consigne n1c à n6c des vitesses de rotation des six coupleurs électromagnétiques disposés sur l'arbre 23. Ces six valeurs de consigne sont envoyées à six variateurs, respectivement 35.1 à 35.6 commandant les courants envoyés aux électroaimants 25.1 à 25.6 respectivement. Chacune des poulies 26.1 à 26.6 est associée à un capteur de sa position angulaire, et le signal de sortie de chacun de ces capteurs, respectivement p1 à p6 est envoyé au circuit 33 pour asservir les valeurs de n1c à n6c, respectivement. Il en résulte les vitesses de rotation réalisées effectivement n1 r à n6r par les poulies 26.1 à 26.6, déterminant les positions instantanées successives de la plate-forme 2.

## Revendications

1. Dispositif de mise en mouvement à débattement limité de charge selon un à six degrés de liberté, comportant :
a - une embase dite de référence (3) et une plate-forme (2) ayant un centre de gravité pouvant supporter une charge avec un centre de gravité placé proche du centre de gravité de la plate-forme (2).
b - trois dispositifs élastiques passifs (6-8) reliés d'un côté à la plate-forme (2) en des points (9) qui sont positionnés autour du centre de gravité de la plate-forme (2), et reliés de l'autre côté à l'embase de référence (3), ces dispositifs passifs (6-8) sollicitant la charge dans une direction donnée.
c - trois dispositifs d'actionnement (10-15) coopérant chacun avec un des dispositifs passifs (6-8) et reliés d'un côté à l'embase de référence (3) et de l'autre côté à la plate-forme (2), en des points qui sont également positionnés autour du centre de gravité de la charge posée sur la plate-forme (2), ces dispositifs d'actionnement (10-15) sollicitant la charge de façon antagoniste par rapport aux dispositifs passifs (6-8).
**caractérisé en ce que**:
d - les dispositifs d'actionnement comportent chacun deux branches de longueur variable (10-11,12-13,14-15) disposées de part et d'autre du dispositif élastique (6-8) correspondant, ces branches étant reliées à la plate-forme (2) près des points de fixation des dispositifs élastiques (6-8) et étant reliées à l'embase de référence (3) en des points équidistants du point de fixation sur l'embase (3) du dispositif élastique correspondant (6-8), les branches de chacune des paires des dispositifs d'actionnement concourant en un point (16-17,18-19,20-21) qui est proche du point de fixation sur la plate-forme (2) du dispositif élastique (6-8) correspondant.

2. Dispositif selon la revendication 1, **caractérisé en ce que** les deux branches de chaque dispositif d'actionnement (10-15) sont reliées à un dispositif de commande commun (27-29).

3. Dispositif selon la revendication 1, **caractérisé en ce que** chaque branche de chaque dispositif d'actionnement (10-15) est commandée individuellement ou de façon combinatoire par un moteur (27-28-29).

4. Dispositif selon l'une des revendications 1 ou 2, **caractérisé en ce que** les dispositifs d'actionnement (10-15) sont commandés par un dispositif de commande (DA) à moteur commun (22).

5. Dispositif selon la revendication 4, **caractérisé en ce que** le moteur commun (22) est régulé en vitesse.

6. Dispositif selon la revendication 4 ou 5, **caractérisé en ce que** toutes les branches des dispositifs d'actionnement (10-15) sont reliées à des coupleurs (DA).

7. Dispositif selon la revendication 6, **caractérisé en ce que** les coupleurs (DA) sont des coupleurs électromagnétiques (24.1-24.6 ; 25.1-25.6) disposés sur un arbre commun (23) entraîné par le moteur commun.

8. Dispositif selon l'une des revendications précédentes, **caractérisé en ce que** l'une des paires (10-11) de dispositifs d'actionnement (10-15) est remplacée par une bielle articulée à ses deux extrémités.

9. Dispositif selon l'une des revendications, précédentes, **caractérisé en ce que** les dispositifs élastiques passifs (6-8) sont l'un au moins des dispositifs suivants : ressorts, vérins à gaz, dispositifs élastiques en traction, dispositifs élastiques en compression.

10. Dispositif selon l'une des revendications précédentes. **caractérisé en ce que** les dispositifs d'actionnement (10-15) comportent l'un au moins des dispositifs suivants : câbles tendus, chaînes, biellettes.

## Claims

1. Device for setting a load in motion with limited displacement in six degrees of freedom, comprising:
a - a base (3) known as a reference base and a platform (2) having a centre of gravity able to support a load with a centre of gravity placed near to the centre of gravity of the platform (2)
b - three passive elastic devices (6-8) connected, on the one hand, to the platform (2) at points (9) which are positioned around the centre of gravity of the platform (2) and connected, on the other hand, to the reference base (3), these passive devices (6-8) urging the load in a given direction,
c - three actuating devices (10-15) each collaborating with one of the passive devices (6-8) and connected, on the one hand, to the reference base (3) and, on the other hand, to the platform (2) at points which are also positioned around the centre of gravity of the load placed on the platform (2), these actuating devices (10-15) urging the load in the opposite direction to the passive devices (6-8),
**characterized in that**
d - the actuating devices each comprise two branches of variable length (10-11, 12-13, 14-15) arranged one on each side of the corresponding elastic device (6-8), these branches being connected to the platform (2) near to the points of attachment of the elastic devices (6-8) and being connected to the reference base (3) at points equidistant from the point of attachment to the base (3) of the corresponding elastic device (6-8), the branches of each of the pairs of actuating devices converging at a point (16-17, 18-19, 20-21) which is close to the point of attachment of the corresponding elastic device (6-8) to the platform (2).

2. Device according to Claim 1, **characterized in that** the two branches of each actuating device (10-15) are connected to a common control device (27-29).

3. Device according to Claim 1, **characterized in that** each branch of each actuating device (10-15) is controlled individually or in combination, by a motor (27-28-29).

4. Device according to one of Claims 1 and 2, **characterized in that** the actuating devices (10-15) are controlled by a control device (DA) with a common motor (22).

5. Device according to Claim 4, **characterized in that** the common motor (22) is controlled in terms of speed.

6. Device according to Claim 4 or 5, **characterized in that** all the branches of the actuating devices (10-1) are connected to couplers (DA).

7. Device according to Claim 6, **characterized in that** the couplers (DA) are electromagnetic couplers (24.1-24.6; 25.1-25.6) arranged on a common shaft (23) driven by the common motor.

8. Device according to one of the preceding claims, **characterized in that** one of the pairs (10-11) of actuating devices (10-15) is replaced by a connecting rod articulated at both ends.

9. Device according to one of the preceding claims, **characterized in that** the passive elastic devices (6-8) are at least one of the following devices: springs, gas struts, elastic devices operating in tension, elastic devices operating in compression.

10. Device according to one of the preceding claims, **characterized in that** the actuating devices (10-15) comprise at least one of the following devices: taut cables, chains, link rods.

## Patentansprüche

1. Vorrichtung, um eine Last entlang ein bis sechs Freiheitsgraden in eine Bewegung mit begrenztem Bewegungsraum zu versetzen, mit:
a - einer sogenannten Bezugsfußfläche (3) und einer Plattform (2) mit einem Schwerpunkt, die eine Last mit einem Schwerpunkt tragen kann, welcher nahe dem Schwerpunkt der Plattform (2) angeordnet ist,
b - drei passiven elastischen Vorrichtungen (6-8), die auf einer Seite mit der Plattform (2) an Punkten (9) verbunden sind, die um den Schwerpunkt der Plattform (2) angeordnet sind, und auf der anderen Seite mit der Bezugfußfläche (3) verbunden sind, wobei diese passiven Vorrichtungen (6-8) die Last in einer gegebenen Richtung beaufschlagen,
c - drei Betätigungsvorrichtungen (10-15), die jeweils mit einer der passiven Vorrichtungen (6-8) zusammenwirken und auf einer Seite mit der Bezugsfußfläche (3) und auf der anderen Seite mit der Plattform (2) an Punkten verbunden sind, die ebenfalls um den Schwerpunkt der Last angeordnet sind, die auf die Plattform (2) gestellt ist, wobei diese Betätigungsvorrichtungen (10-15) die Last in gegenwirkender Weise bezüglich der passiven Vorrichtungen (6-8) beaufschlagen,
**dadurch gekennzeichnet, daß**
d - die Betätigungsvorrichtungen jeweils zwei Abschnitte mit variabler Länge (10-11, 12-13, 14-15) aufweisen, die auf beiden Seiten der entsprechenden elastischen Vorrichtung (6-8) angeordnet sind, wobei diese Abschnitte mit der Plattform (2) nahe den Befestigungspunkten der elastischen Vorrichtungen (6-8) verbunden sind und mit der Bezugsfußfläche (3) an Punkten verbunden sind, die vom Befestigungspunkt der entsprechenden elastischen Vorrichtung (6-8) an der Fußfläche (3) gleich weit entfernt sind, wobei die Abschnitte von jedem der Paare der Betätigungsvorrichtungen sich in einem Punkt (16-17, 18-19, 20-21) kreuzen, der nahe dem Befestigungspunkt der entsprechenden elastischen Vorrichtung (6-8) an der Plattform (2) liegt.

2. Vorrichtung nach Anspruch 1, **dadurch gekennzeichnet, daß** die zwei Abschnitte von jeder Betätigungsvorrichtung (10-15) mit einer gemeinsamen Steuervorrichtung (27-29) verbunden sind.

3. Vorrichtung nach Anspruch 1, **dadurch gekennzeichnet, daß** jeder Abschnitt von jeder Betätigungsvorrichtung (10-15) einzeln oder in kombinatorischer Weise durch einen Motor (27-28-29) gesteuert wird.

4. Vorrichtung nach einem der Ansprüche 1 oder 2, **dadurch gekennzeichnet, daß** die Betätigungsvorrichtungen (10-15) durch eine Steuervorrichtung (DA) mit einem gemeinsamen Motor (22) gesteuert werden.

5. Vorrichtung nach Anspruch 4, **dadurch gekennzeichnet, daß** der gemeinsame Motor (22) geschwindigkeitsgeregelt ist.

6. Vorrichtung nach Anspruch 4 oder 5, **dadurch gekennzeichnet, daß** alle Abschnitte der Betätigungsvorrichtungen (10-15) mit Kopplern (DA) verbunden sind.

7. Vorrichtung nach Anspruch 6, **dadurch gekennzeichnet, daß** die Koppler (DA) elektromagnetische Koppler (24.1-24.6; 25.1-25.6) sind, die an einer gemeinsamen Achse (23) angeordnet sind, welche durch den gemeinsamen Motor angetrieben wird.

8. Vorrichtung nach einem der vorangehenden Ansprüche, **dadurch gekennzeichnet, daß** eines der Paare (10-11) von Betätigungsvorrichtungen (10-15) durch eine Pleuelstange ersetzt ist, die an ihren zwei Enden angelenkt ist.

9. Vorrichtung nach einem der vorangehenden Ansprüche, **dadurch gekennzeichnet, daß** die passiven elastischen Vorrichtungen (6-8) mindestens eine der folgenden Vorrichtungen sind: Federn, Gaszylinder, elastische Zugvorrichtungen, elastische Druckvorrichtungen.

10. Vorrichtung nach einem der vorangehenden Ansprüche, **dadurch gekennzeichnet, daß** die Betätigungsvorrichtungen (10-15) mindestens eine der folgenden Vorrichtungen umfassen: gespannte Seile, Ketten, Schwingarme.
